# EUROPÄISCHE PATENTSCHRIFT

(11) **EP 3 139 123 B1**
(45) Veröffentlichungstag und Bekanntmachung des Hinweises auf die Patenterteilung: **10.01.2018**
(21) Anmeldenummer: 15183577.4
(22) Anmeldetag: 02.09.2015
(51) Int. Cl.: F28D 20/02

(54) **LATENTWÄRMESPEICHER MIT EINER VORRICHTUNG ZUR AUSLÖSUNG DER KRISTALLISATION IN EINEM PHASENWECHSELMATERIAL UND VERFAHREN ZUR AUSLÖSUNG DER KRISTALLISATION IN EINEM PHASENWECHSELMATERIAL**
LATENT HEAT STORAGE UNIT WITH A DEVICE FOR TRIGGERING THE CRYSTALLIZATION IN A PHASE CHANGE MATERIAL AND METHOD FOR TRIGGERING THE CRYSTALLIZATION IN A PHASE CHANGE MATERIAL
ACCUMULATEUR DE CHALEUR LATENTE DOTE D'UN DISPOSITIF DE DECLENCHEMENT DE LA CRISTALLISATION DANS UN MATERIAU A CHANGEMENT DE PHASE ET PROCEDE DE DECLENCHEMENT DE LA CRISTALLISATION DANS UN MATERIAU A CHANGEMENT DE PHASE

(43) Veröffentlichungstag der Anmeldung: 08.03.2017
(73) Patentinhaber: H.M. Heizkörper GmbH & Co. KG, 37351 Dingelstädt (DE)
(72) Erfinder:
(74) Vertreter: Oppermann, Frank

(56) Entgegenhaltungen:
- WO-A1-98/40684
- AT-B- 382 636
- DE-A1-102012 024 211
- DE-A1-102013 204 690

## Beschreibung

Die Erfindung betrifft einen Latentwärmespeicher mit einem Speicherbehälter zur Aufnahme eines Phasenwechselmaterials und einer Vorrichtung zur Auslösung einer Kristallisation in dem Phasenwechselmaterial. Darüber hinaus betrifft die Erfindung ein Verfahren zur Auslösung einer Kristallisation eines in einem Speicherbehälter eines Latentwärmespeichers befindlichen Phasenwechselmaterials.

In solarthermischen Anlagen finden zum Speichern von Solarenergie Latentwärmespeicher Verwendung, die über einen Speicherbehälter zur Aufnahme eines Wärmespeichermediums verfügen. In dem Speicherbehälter ist ein Wärmetauscher angeordnet, der mit einem Vorlauf zum Zuführen eines Wärmeträgermediums und einem Rücklauf zum Abführen des Wärmeträgermediums verbunden ist.

Die bekannten Latentwärmespeicher können durch Zufuhr von Wärme aufgeladen und durch Abfuhr der gespeicherten Wärme entladen werden. Die bekannten Wärmespeichersysteme verfügen zum Speichern der Wärmeenergie über mehrere Latentwärmespeicher.

Ein Wärmespeichersystem für eine solartechnische Anlage ist aus der EP 2 273 226 A1 bekannt. Das Wärmespeichersystem umfasst eine Mehrzahl von Wärmespeicher-Behältern, die nacheinander aufgeladen oder entladen werden können. Die einzelnen Wärmespeicher-Behälter sind über ein Leitungssystem miteinander verbunden. Zur Steuerung des Zu- bzw. Abflusses des Wärmeträgermediums sind in den Zuführ- und Abführleitungen Ventile angeordnet, die von einer Steuereinheit angesteuert werden. Die Steuerung erlaubt eine Auf- bzw. Entladung der einzelnen Behälter.

Als Wärmespeichermedium kann ein Phasenwechselmaterial (PCM) Verwendung finden, das zum Speichern der solaren Wärme die Enthalpie reversibler thermodynamischer Zustandsänderungen ausnutzt. Ein bekanntes Phasenwechselmaterial ist beispielsweise Natriumacetat-Trihydrat, das eine hohe Schmelzenthalpie und einen relativ geringen Preis hat. Beim Laden des Latentwärmespeichers geht das Phasenwechselmaterial von einem festen Aggregatzustand in einen flüssigen Aggregatzustand über. Natriumacetat-Trihydrat beispielsweise wird bei einer Schmelztemperatur von 58 °C verflüssigt. Beim Abkühlen bleibt das Salzhydrat als unterkühlte Schmelze in einem metastabilen Zustand flüssig. Dabei verringert sich das Volumen des Salzhydrats. Wenn eine Kristallisation in der unterkühlten Schmelze ausgelöst wird, erwärmt sich das Salzhydrat auf eine Temperatur von 58 °C, wobei die latente Wärme wieder freigegeben wird. Der metastabile Zustand kann grundsätzlich über einen beliebig langen Zeitraum erhalten bleiben. Bei den bekannten Wärmespeichersystemen besteht aber die Gefahr einer unbeabsichtigten Auslösung der Kristallisation in dem Phasenwechselmaterial, so dass der Latentwärmespeicher zu einem Zeitpunkt entladen wird, zu dem die Wärme nicht gebraucht wird. Für einen störungsfreien Betrieb eines Wärmespeichersystems ist daher eine sichere Auslösung der Kristallisation zu einem bestimmten Zeitpunkt von entscheidender Bedeutung.

Die DE 10 2010 046 243 A1 beschreibt eine Vorrichtung zur Auslösung der Kristallisation für einen Latentwärmespeicher, die über ein mechanisch verformbares Auslöseelement und einen Aktivierungsmechanismus verfügt. Das Auslösungselement ist als ein Plättchen ausgebildet, das nach Betätigung des Aktivierungsmechanismus schlagartig von einer Form in eine andere Form übergeht. Der Aktivierungsmechanismus weist eine elektrische, elektromagnetische, pneumatische oder piezoelektrische Antriebseinheit auf.

AT-B-382636 offenbart einen Latentwärmespeicher gemäß dem Oberbegriff des Anspruchs 1. Der Erfindung liegt die Aufgabe zugrunde, einen Latentwärmespeicher für eine solarthermische Anlage zu schaffen, der über eine Vorrichtung zur Auslösung der Kristallisation in dem Phasenwechselmaterial verfügt, mit der sich der Kristallisationsprozess sicher in Gang setzen lässt. Eine weitere Aufgabe der Erfindung ist, einen Latentwärmespeicher für eine solarthermische Anlage zu schaffen, der eine Vorrichtung zur Auslösung der Kristallisation in dem Phasenwechselmaterial aufweist, die sich in großen Stückzahlen bei verhältnismäßig geringen Produktionskosten herstellen lässt.

Darüber hinaus ist eine Aufgabe der Erfindung ein Verfahren anzugeben, mit dem sich der Kristallisationsprozess in einem Phasenwechselmaterial sicher in Gang setzen lässt.

Die Lösung dieser Aufgaben erfolgt erfindungsgemäß mit den Merkmalen der unabhängigen Patentansprüche 1 und 12. Die Gegenstände der abhängigen Ansprüche betreffen vorteilhafte Ausführungsformen der Erfindung.

Die Auslösung der Kristallisation in dem Phasenwechselmaterial, d.h. der Übergang des Phasenwechselmaterials von dem metastabilen Zustand in den stabilen Zustand, beruht bei der erfindungsgemäßen Vorrichtung und dem erfindungsgemäßen Verfahren auf der Vorgabe von Kristallisationskeimen, die eine Keimbildung in Gang setzen, so dass sich bei den gegebenen Bedingungen aus der metastabilen Phase eine stabile Phase ausbildet. Dem Phasenwechselmaterial wird hierzu ein mit Kristallisationskeimen (Impfkristall) angereichertes gasförmiges Medium zugeführt. Die Zuführung des gasförmigen Mediums mit den Kristallisationskeimen erfolgt unterhalb der Grenzschicht, die sich zwischen dem in dem Speicherbehälter befindlichen Restvolumen eines gasförmigen Mediums und dem Phasenwechselmaterial ausbildet. Dadurch wird erreicht, dass die Kristallisationskeime direkt in das Phasenwechselmaterial gelangen. In Versuchen hat sich gezeigt, dass der Phasenübergang von dem metastabilen in den stabilen Zustand mit der Vorgabe von Kristallisationskeimen im Phasenwechselmaterial sicher eingeleitet werden kann.

Der erfindungsgemäße Latentwärmespeicher weist einen Speicherbehälter auf, der bis auf ein Restvolumen eines gasförmigen Mediums mit einem Phasenwechselmaterial befüllt ist. Das mit Kristallisationskeimen angereicherte gasförmige Medium wird dem Phasenwechselmaterial mit einem Leitungssystem zugeführt, das eine sich in das Behälterinnere des Speicherbehälters erstreckte Zuführleitung aufweist, deren offenes Ende unterhalb der Grenzschicht zwischen dem in dem Speicherbehälter befindlichen gasförmigen Medium und dem Phasenwechselmaterial liegt. Die Zuführleitung kann unterschiedlich ausgebildet sein. Allein entscheidend ist, dass das gasförmige Medium mit den Kristallisationskeimen dem Phasenwechselmaterial unterhalb dessen Oberfläche zugeführt wird. Dadurch wird erreicht, dass ein sich auf der Oberfläche des Phasenwechselmaterials bildender Wasserfilm nicht die Auslösung der Kristallisation verhindern kann.

Das Phasenwechselmaterial unterliegt in dem Speicherbehälter während der Lade- und Entladezyklen einer Volumenänderung. Die erfindungsgemäße Vorrichtung bzw. das erfindungsgemäße Verfahren sehen vor, dass bei einer Vergrößerung des Volumens des Phasenwechselmaterials in dem Behälter befindliches gasförmiges Medium aus dem Speicherbehälter abgeführt wird und bei einer Verringerung des Volumens des Phasenwechselmaterials gasförmiges Medium in den Behälter zugeführt wird, das nicht mit Kristallisationskeimen angereichert ist.

Obwohl die Vorgabe der Kristallisationskeime eine Stoffzufuhr von außen voraussetzt, wird in Bezug auf die Kristallisationskeime ein geschlossenes System geschaffen, in dem sich die Kristallisation des Phasenwechselmaterials über eine Vielzahl von Lade- und Entladezyklen zu einem bestimmten Zeitpunkt sicher auslösen lässt.

Der erfindungsgemäße Latentwärmespeicher weist Mittel zum Regeln der Strömung in dem Leitungssystem auf, die derart ausgebildet sind, dass verhindert wird, dass bei einer Verringerung des Volumens des Phasenwechselmaterials mit Kristallisationskeimen angereichertes gasförmiges Medium durch das Leitungssystem in den Speicherbehälter angesaugt wird, und Mittel zum Ent- und Belüften des Speicherbehälters, die derart ausgebildet sind, dass bei einer Vergrößerung des Volumens des Phasenwechselmaterials in dem Behälter befindliches gasförmiges Medium aus dem Speicherbehälter abgeführt wird, und bei einer Verringerung des Volumens des Phasenwechselmaterials, wenn das Phasenwechselmaterial abgekühlt wird, gasförmiges Medium in den Behälter zugeführt wird, das nicht mit Kristallisationskeimen angereichert ist.

Die Mittel zum Fördern des gasförmigen Mediums und die Mittel zum Anreichern des gasförmigen Mediums mit Kristallisationskeimen können beliebig ausgebildet sein. Allein entscheidend ist, dass ein Zustrom von Kristallisationskeimen nur für die Auslösung der Kristallisation zu einem bestimmten Zeitpunkt möglich ist, ansonsten aber keine Kristallisationskeime in das Phasenwechselmaterials gelangen können, die ein Phasenübergang von dem metastabilen in den stabilen Zustand unbeabsichtigt in Gang setzen könnten.

Das mit Kristallisationskeimen angereicherte gasförmige Medium kann jedes Gas oder Gasgemisch sein. Vorzugsweise ist das gasförmige Medium Luft, insbesondere die Umgebungsluft. Das Restvolumen in dem Speicherbehälter ist ebenfalls vorzugsweise mit Luft, insbesondere Umgebungsluft, befüllt. Das Restvolumen kann aber auch mit einem Schutzgas befüllt sein.

Der Kristallisationskeime enthaltenden Stoff ist vorzugsweise ein Salz in kristalliner Form. Vorzugsweise ist der Kristallisationskeime enthaltenden Stoff derselbe Stoff wie das Phasenwechselmaterial, insbesondere Natriumacetat-Trihydrat. Das kristalline Salz liegt vorzugsweise als Schüttgut vor. Vorzugsweise hat das kristalline Salz eine Korngröße, die zwischen 0,1 µm und 5 cm, insbesondere zwischen 1 cm und 5 cm, liegt. Beim Einblasen von Luft in das als Schüttgut vorliegende Salz wird die Luft mit Kristallisationskeimen angereicht, die dem Phasenwechselmaterial zugeführt wird. Eine relativ große Korngröße hat sich insofern als vorteilhaft erwiesen, als in der Schüttung ein ausreichendes Luftvolumen zur Verfügung steht, durch das die Luft strömen kann. Dadurch verringert sich auch die Gefahr der Verklumpung des Salzes.

Eine bevorzugte Ausführungsform der Erfindung sieht vor, dass die Mittel zum Anreichern des gasförmigen Mediums mit Kristallisationskeimen einen Vorratsbehälter aufweisen, der mit einem Kristallisationskeime enthaltenden Stoff befüllt ist, wobei der Vorratsbehälter einen Einlass zum Zuführen eines gasförmigen Mediums und einen Auslass zum Abführen des mit Kristallisationskeimen angereichten gasförmigen Mediums aufweist.

Das gasförmige Medium, insbesondere die Umgebungsluft, wird vorzugsweise unter Druck dem Vorratsbehälter zugeführt. Zum Fördern des gasförmigen Mediums weist die erfindungsgemäße Vorrichtung einen Verdichter auf, der die Umgebungsluft auf den erforderlichen Druck verdichtet.

Bei einer besonders bevorzugten Ausführungsform ist an den Einlass des Vorratsbehälters eine sich in das Behälterinnere erstreckende Zuführleitung angeschlossen, so dass das gasförmige Medium, insbesondere die Umgebungsluft, unterhalb der Oberfläche des die Kristallisationskeime enthaltenden Stoffes zuströmen kann. Es ist aber auch möglich, dass die Luft nur auf die Oberfläche des Stoffes geblasen wird.

Eine weitere besonders bevorzugte Ausführungsform sieht vor, dass die Mittel zum Regeln der Strömung in dem Leitungssystem ein Rückschlagventil aufweisen, das eine Strömung des gasförmigen Medium in dem Leitungssystem nur in einer Richtung, d.h. in Richtung des Speicherbehälters, erlaubt. Das Schließelement des Rückschlagventils kann eine Kugel, Kegel Klappe oder Membran sein. Vorzugsweise ist das Rückschlagventil ein federbelastetes Rückschlagventil. Da das federbelastete Rückschlagventil sich erst dann in Durchlassrichtung öffnen kann, wenn auf der einen Seite ein Überdruck bzw. auf der anderen Seite ein Unterdruck anliegt, deren Betrag einen vorgegebenen Mindestdruck überschreitet, verhindert das federbelastete Rückschlagventil, dass durch das Leitungssystem ein mit Kristallisationskeimen angereichertes gasförmiges Medium angesaugt wird, solange der Unterdruck in dem Speicherbehälter den Mindestdruck nicht übersteigt.

In Versuchen hat sich gezeigt, dass eine Verringerung des Volumens des Phasenwechselmaterials beim Abkühlen des Phasenwechselmaterials dazu führen kann, dass sich das federbelastete Rückschlagventil in Durchflussrichtung aufgrund des Unterdrucks in dem Speicherbehälter infolge der Volumenverringerung des Phasenwechselmaterials öffnen kann. Wenn sich das Rückschlagventil öffnet, kann ein mit Kristallisationskeimen angereichertes gasförmiges Medium in den Speicherbehälter gelangen. Da der erfindungsgemäße Latentwärmespeicher und das erfindungsgemäße Verfahren aber eine Ent- und Belüftung des Speicherbehälters vorsehen, kann ein Unterdruck in dem Speicherbehälter nicht entstehen, der größer als der Betrag des Mindestdrucks ist, bei dem das Rückschlagventil in Durchlassrichtung öffnen kann.

Die Mittel zum Ent- und Belüften des Speicherbehälters weisen vorzugsweise einen Partikelfilter auf, wobei die eine Kammer des Filters mit dem Behälterinneren des Speicherbehälters und die andere Kammer des Filters mit einem gasförmigen Medium, vorzugsweise mit der Umgebungsluft, in Strömungsverbindung stehen. Der Partikelfilter verhindert, dass aus der Umgebung Partikel, die Kristallisationskeime bilden könnten, in den Speicherbehälter gelangen können.

Bei einer besonders bevorzugten Ausführungsform weist die sich in das Behälterinnere des Speicherbehälters erstreckte Zuführleitung eine Belüftungsöffnung auf, die oberhalb der Grenzschicht liegt, die sich zwischen dem in dem Speicherbehälter befindlichen gasförmigen Medium und dem Phasenwechselmaterial ausbildet. Die Belüftungsöffnung stellt sicher, dass auch in der Zuführleitung kein Unterdruck entstehen kann, der das Rückschlagventil in Durchlassrichtung öffnen könnte.

Nachfolgend wird ein Ausführungsbeispiel der Erfindung unter Bezugnahme auf die Zeichnungen näher erläutert.

Es zeigen:
- Fig. 1: einen Speicherbehälter eines Latentwärmespeicher eines Wärmespeichersystems in teilweiser geschnittener Darstellung, und
- Fig. 2: den erfindungsgemäßen Latentwärmespeicher in vereinfachter schematischer Darstellung.

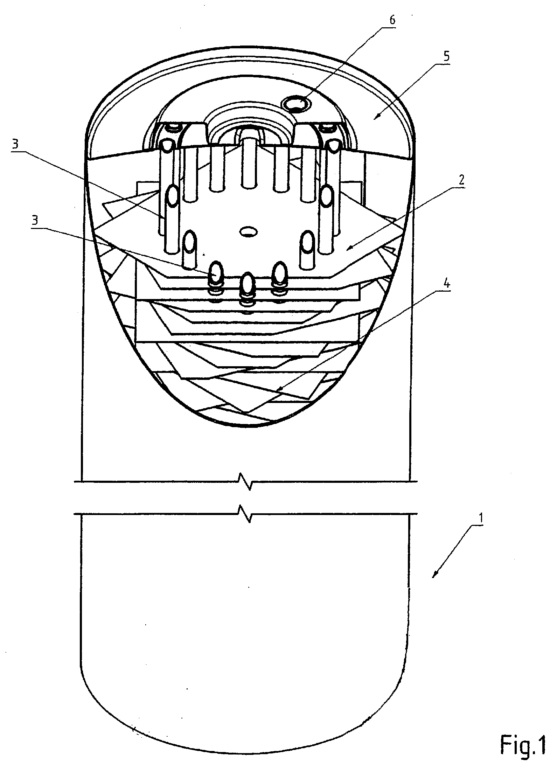

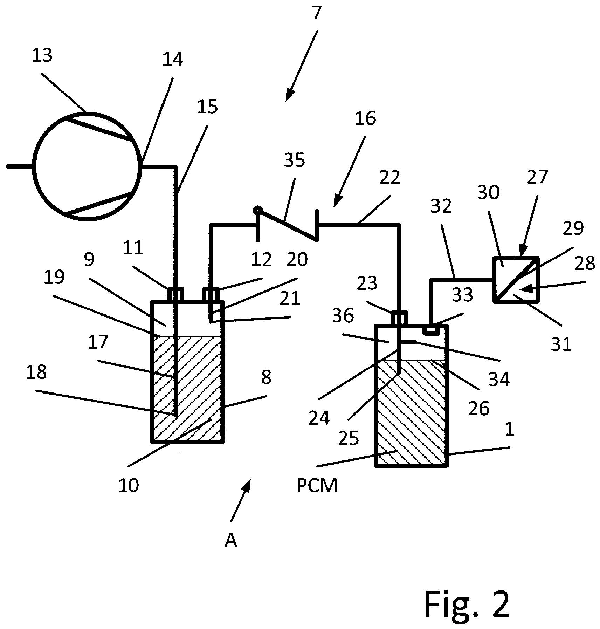

Fig. 1 zeigt in teilweise geschnittener Darstellung ein Ausführungsbeispiel eines Latentwärmespeichers, der Bestandteil eines mehrere Latentwärmespeicher umfassenden Latentwärmespeichersystems sein kann. Der Latentwärmespeicher weist einen Speicherbehälter 1 auf, der bis auf ein Restvolumen 36 an Umgebungsluft mit einem nicht dargestellten Phasenwechselmaterial PCM befüllt ist (Fig. 2), das einen Wärmetauscher 2 umschließt. Bei dem vorliegenden Ausführungsbeispiel ist das Phasenwechselmaterial Natriumacetat-Trihydrat.

Der Wärmetauscher 2 weist eine Mehrzahl von Rohren 3 auf, die um eine zentrale Achse umfangsmäßig verteilt angeordnet sind. Die Rohre 3 des Wärmetauschers 2 erstrecken sich durch einen Stapel 4 von Platten. Der Plattenstapel 4 dient der Vergrößerung der wirksamen Wärmeübergangsfläche. Am Deckelteil 5 des Behälters befindet sich ein Rücklauf-Anschluss 6 zum Abführen eines flüssigen Wärmeträgers und am Bodenteil 7 ein nicht dargestellter Vorlauf-Anschluss zum Zuführen des Wärmeträgers. In der Gebrauchslage liegt der Rücklauf-Anschluss 6 oben und der Vorlauf-Anschluss unten.

Fig. 2 zeigt in einer vereinfachten schematischen Darstellung den erfindungsgemäßen Latentwärmespeicher, der einen Speicherbehälter 1 aufweist, der unter Bezugnahme auf Fig. 1 beschrieben ist. Zur Auslösung des Kristallisationsprozesses in dem Phasenwechselmaterial (PCM) verfügt der Latentwärmespeicher über eine Vorrichtung 7, die nachfolgend beschreiben wird.

Die Vorrichtung 7 zur Auslösung des Kristallisationsprozesses weist einen Vorratsbehälter 8 auf, der ein kleineres Volumen als der Speicherbehälter 1 haben kann. Der Vorratsbehälter 8 ist bis auf ein Restvolumen 9 an Umgebungsluft mit einem Kristallisationskeime enthaltenden Stoff 10 befüllt, vorzugsweise ein kristallines Salz, das als Schüttgut vorliegt. Der Vorratsbehälter 8 kann aber auch vollständig mit dem Kristallisationskeime enthaltenden Stoff 10 befüllt sein. Der Kristallisationskeime enthaltenden Stoff 10, der vorzugsweise eine Korngröße hat, die zwischen 0,1 µm und 5 cm, insbesondere zwischen 1 und 5 cm liegt, ist bei dem vorliegenden Ausführungsbeispiel Natriumacetat-Trihydrat.

Der Vorratsbehälter 8 weist einen Einlass 11 und einen Auslass 12 auf. Einlass 11 und Auslass 12 sind an der Oberseite des Behälters 8 angeordnet. Dem Vorratsbehälter 8 wird unter einem vorgegebenen Druck Umgebungsluft zugeführt, die mit einem Kompressor 13 verdichtet wird. Der Druck liegt vorzugsweise zwischen 0,01 und 6 bar, insbesondere kleiner als 1 bar, so dass nur eine relativ geringe Energiezufuhr für die Verdichtung der Luft erforderlich ist.

Der Auslass 14 des Kompressors 13 ist über einen ersten Leitungsabschnitt 15 eines Leitungssystems 16 mit dem Einlass 11 des Vorratsbehälters 8 verbunden. An den Einlass 11 des Vorratsbehälters 8 ist eine sich in das Behälterinnere erstreckende Zuführleitung 17 angeschlossen, deren offenes Ende 18 unterhalb der Oberfläche 19 des Kristallisationskeime enthaltenden Stoffes 10, vorzugsweise im Bereich des Behälterbodens, liegt. An den Auslass 12 des Vorratsbehälters 8 ist eine Abführleitung 20 angeschlossen, deren offenes Ende 21 oberhalb der Oberfläche 19 des Kristallisationskeime enthaltenden Stoffes 10 angeordnet ist. Die mit dem Kompressor 13 verdichtete Luft durchströmt den Kristallisationskeime enthaltenden Stoff 10, so dass die Luft mit Kristallisationskeimen angereicht wird und über den Auslass 12 des Vorratsbehälters 8 ausströmt.

Der Auslass 12 des Vorratsbehälters 8 ist über einen Leitungsabschnitt 22 des Leitungssystems 16 mit einem Einlass 23 des Speicherbehälters 1 verbunden, der an der Oberseite des Speicherbehälters angeordnet ist. An den Einlass des Speicherbehälters 1 ist eine sich in das Behälterinnere erstreckende Zuführleitung 24 angeschlossen, deren offenes Ende 25 unterhalb der Oberfläche 26 des Phasenwechselmaterials PCM liegt, so dass mit Kristallisationskeimen angereichte Luft unter dem vorgegebenen Druck unterhalb der Oberfläche 26 des Phasenwechselmaterials PCM in das Phasenwechselmaterials strömt. Durch das Einblasen der Luft in die unterkühlte Schmelze wird das Phasenwechselmaterial geimpft, so dass die Kristallisation initialisiert wird. Da die Luft unterhalb der Oberfläche 26 des Phasenwechselmaterials PCM eingeblasen wird, kann die Initialisierung der Kristallisation nicht durch einen sich auf der Oberfläche des Phasenwechselmaterials bildenden Wasserfilm verhindert werden.

In dem Leitungsabschnitt 22 zwischen Vorrats- und Speicherbehälter 8, 1 ist ein Rückschlagventil 35 angeordnet, das bei dem vorliegenden Ausführungsbeispiel ein federbelastetes Rückschlagventil 35 ist, das eine Strömung der mit Kristallisationskeimen angereichten Luft unter einem vorgegebenen Mindestdruck, bei dem das Ventil öffnet, nur in Durchlassrichtung von dem Vorrats- in den Speicherbehälter 8, 1 zulässt. Der vorgegebene Druck, mit dem die Luft mit dem Kompressor 13 gefördert wird, ist so bemessen, dass dieser oberhalb des Mindestdrucks liegt, bei dem das Rückschlagventil 35 öffnet.

Zur Herstellung eines Druckausgleichs mit der Umgebung weist der Latentwärmespeicher Mittel 27 zur Be- und Entlüftung des Speicherbehälters 1 auf, die einen Partikelfilter 28 aufweisen. Der Partikelfilter 28 weist eine für Partikel, die als Kristallisationskeime wirken könnten, nicht durchlässige Membran 29 auf, die das Filtergehäuse in eine erste Kammer 30 und zweite Kammer 31 unterteilt. Die erste Kammer 30 steht über einen Leitungsabschnitt 32 des Leitungssystems 16 mit einer Be- und Entlüftungsöffnung 33 an der Oberseite des Speicherbehälters 1 in Strömungsverbindung, während die zweite Kammer 31 mit der Umgebungsluft in Strömungsverbindung steht. Wenn sich das Volumen des Phasenwechselmaterials PCM beim Abkühlen des Phasenwechselmaterials, wodurch das Phasenwechselmaterials PCM von dem flüssigen stabilen in den flüssigen metastabilen Zustand übergeht, verringert, strömt über den Partikelfilter 28 gefilterte Umgebungsluft in den Speicherbehälter 1, so dass ein Druckausgleich mit der Umgebung stattfindet. Bei einer Volumenvergrößerung des Phasenwechselmaterials PCM kann über den Partikelfilter 28 Luft aus dem Speicherbehälter 1 abströmen, so dass der Aufbau eines Überdrucks in dem Speicherbehälter vermieden wird.

Eine Volumenverringerung des Phasenwechselmaterials kann trotz der Belüftung über den Partikelfilter 28 zum Aufbau eines Unterdrucks in der Zuführleitung 24 führen, die sich in das Phasenwechselmaterial erstreckt. Es hat sich gezeigt, dass dieser Unterdruck bei den gegebenen Druckverhältnissen zu einem Öffnen des Rückschlagventils 35 in Durchlassrichtung führen kann, so dass ein mit Kristallisationskeimen angereichertes gasförmiges Medium aus dem Vorratsbehälter 8 in den Speicherbehälter 1 gelangen kann. Die Zuführleitung 24 weist daher eine oberhalb der Oberfläche 26 des Phasenwechselmaterials PCM liegende Öffnung 34 auf, so dass über den Partikelfilter 28 ein Druckausgleich mit der Umgebung stattfinden kann. Dadurch wird in Verbindung mit dem Rückschlagventil 35 bei einer Volumenverringerung ein Ansaugen von einem mit Kristallisationskeimen angereicherten gasförmigen Medium wirksam verhindert.

## Patentansprüche

1. Latentwärmespeicher mit einem Speicherbehälter (1), der bis auf ein Restvolumen (9) eines gasförmigen Mediums mit einem Phasenwechselmaterial (PCM) befüllt ist, und einer Vorrichtung (7) zur Auslösung einer Kristallisation in dem Phasenwechselmaterial, wobei die Vorrichtung (7) zur Auslösung einer Kristallisation in dem Phasenwechselmaterial aufweist:
Mittel (13) zum Fördern eines gasförmigen Mediums,
Mittel (8, 10) zum Anreichern des gasförmigen Mediums mit Kristallisationskeimen, ein Leitungssystem (16) zum Zuführen des gasförmigen Mediums, das eine sich in das Behälterinnere des Speicherbehälters (1) erstreckte Zuführleitung (24) aufweist, **dadurch gekennzeichnet, dass** das Ende (25) der Zuführleitung (24) unterhalb der Grenzschicht (26) liegt, die sich zwischen dem in dem Speicherbehälter befindlichen gasförmigen Medium und dem Phasenwechselmaterial ausbildet, und weiterhin dadurch, dass die Vorrichtung zur Auslösung einer Kristallisation in dem Phasenwechselmaterial aufweist:
Mittel (35) zum Regeln der Strömung in dem Leitungssystem (16), die derart ausgebildet sind, dass verhindert wird, dass bei einer Verringerung des Volumens des Phasenwechselmaterials(PCM) mit Kristallisationskeimen angereichertes gasförmiges Medium durch das Leitungssystem in den Speicherbehälter (1) angesaugt wird, und
Mittel (27) zum Ent- und Belüften des Speicherbehälters, die derart ausgebildet sind, dass bei einer Vergrößerung des Volumens des Phasenwechselmaterials (PCM) in dem Behälter befindliches gasförmiges Medium aus dem Speicherbehälter (1) abgeführt wird, und bei einer Verringerung des Volumens des Phasenwechselmaterials ein gasförmiges Medium in den Speicherbehälter (1) zugeführt wird, das nicht mit Kristallisationskeimen angereichert ist.

2. Latentwärmespeicher nach Anspruch 1, **dadurch gekennzeichnet, dass** die Mittel (8, 10) zum Anreichern des gasförmigen Mediums mit Kristallisationskeimen einen Vorratsbehälter (8) aufweisen, der mit einem Kristallisationskeime enthaltenden Stoff (10) befüllt ist, wobei der Vorratsbehälter (8) einen Einlass (11) um Zuführen eines gasförmigen Mediums und einen Auslass (12) zum Abführen des mit Kristallisationskeimen angereichten gasförmigen Mediums aufweist.

3. Latentwärmespeicher nach Anspruch 2, **dadurch gekennzeichnet, dass** an den Einlass (11) des Vorratsbehälters (8) eine sich in das Behälterinnere erstreckende Zuführleitung (17) angeschlossen ist.

4. Latentwärmespeicher nach einem der Ansprüche 1 bis 3, **dadurch gekennzeichnet, dass** die Mittel zum Fördern des gasförmigen Mediums einen Kompressor (13) zum Verdichten des gasförmige Mediums aufweisen.

5. Latentwärmespeicher nach einem der Ansprüche 1 bis 4, **dadurch gekennzeichnet, dass** die Mittel zum Regeln der Strömung in dem Leitungssystem ein in dem Leitungssystem angeordnetes Rückschlagventil (35) aufweisen.

6. Latentwärmespeicher nach einem der Ansprüche 1 bis 5, **dadurch gekennzeichnet, dass** die Mittel (27) zum Ent- und Belüften des Speicherbehälters (1) einen Partikelfilter (28) aufweisen, wobei die eine Kammer (30) des Partikelfilters (28) mit dem Behälterinneren des Speicherbehälters (1) und die andere Kammer (31) des Filters (28) mit einem gasförmigen Medium in Strömungsverbindung stehen.

7. Latentwärmespeicher nach einem der Ansprüche 1 bis 6, **dadurch gekennzeichnet, dass** die sich in das Behälterinnere des Speicherbehälters (1) erstreckte Zuführleitung (24) eine Belüftungsöffnung (34) aufweist, die oberhalb der Grenzschicht (26) liegt, die sich zwischen dem in dem Speicherbehälter befindlichen gasförmigen Medium und dem Phasenwechselmaterial (PCM) ausbildet.

8. Latentwärmespeicher nach einem der Ansprüche 1 bis 7, **dadurch gekennzeichnet, dass** das gasförmige Medium Luft ist.

9. Latentwärmespeicher nach einem der Ansprüche 1 bis 8, **dadurch gekennzeichnet, dass** der Kristallisationskeime enthaltende Stoff (10) ein Salz in kristalliner Form ist.

10. Latentwärmespeicher nach einem der Ansprüche 1 bis 9, **dadurch gekennzeichnet, dass** der Kristallisationskeime enthaltende Stoff (10) als Schüttgut vorliegt.

11. Latentwärmespeicher nach einem der Ansprüche 1 bis 10, **dadurch gekennzeichnet, dass** das Phasenwechselmaterial (PCM) Natriumacetat-Trihydrat ist und der Kristallisationskeime enthaltende Stoff Natriumacetat-Trihydrat ist.

12. Verfahren zur Auslösung einer Kristallisation eines in einem Speicherbehälter (1) eines Latentwärmespeichers gemäß Anspruch 1 befindlichen Phasenwechselmaterials (PCM), wobei ein mit Kristallisationskeimen angereichertes gasförmiges Medium dem Phasenwechselmaterial (PCM) unterhalb der Grenzschicht (26) zugeführt wird, die sich zwischen dem in dem Speicherbehälter (1) befindlichen Restvolumen (36) eines gasförmigen Mediums und dem Phasenwechselmaterial (PCM) ausbildet, und bei einer Vergrößerung des Volumens des Phasenwechselmaterials in dem Speicherbehälter (1) befindliches gasförmiges Medium aus dem Speicherbehälter abgeführt wird und bei einer Verringerung des Volumens des Phasenwechselmaterials in den Speicherbehälter ein gasförmiges Medium zugeführt wird, das nicht mit Kristallisationskeimen angereichert ist.

13. Verfahren nach Anspruch 12, **dadurch gekennzeichnet, dass** das gasförmige Medium Luft ist.

14. Verfahren nach Anspruch 12 oder 13, **dadurch gekennzeichnet, dass** der Kristallisationskeime enthaltende Stoff (10) ein Salz in kristalliner Form ist.

15. Verfahren nach einem der Ansprüche 12 bis 14, **dadurch gekennzeichnet, dass** das Phasenwechselmaterial (PCM) Natriumacetat-Trihydrat ist und der Kristallisationskeime enthaltende Stoff (10) Natriumacetat-Trihydrat ist.

## Claims

1. Latent heat accumulator comprising a storage tank (1) filled with a phase change material (PCM) up to a residual volume (9) of a gaseous medium, and comprising a device (7) for triggering crystallisation in the phase change material,
the device (7) comprising, in order to trigger crystallisation in the phase change material:
means (13) for conveying a gaseous medium,
means (8, 10) for enriching the gaseous medium with crystallisation germs,
a line system (16) for feeding the gaseous medium, comprising a feed line (24) extending into the interior of the storage tank (1), **characterised in that** the end (25) of the feed line (24) is below the boundary layer (26) that forms between the gaseous medium located in the storage tank and the phase change material,
and also **in that** the device for triggering crystallisation in the phase change material comprises:
means (35) for controlling the flow in the line system (16) that are designed such that gaseous medium enriched with crystallisation germs is prevented from being drawn through the line system into the storage tank (1) when the volume of the phase change material (PCM) decreases, and
means (27) for degassing and ventilating the storage tank that are designed such that gaseous medium located in the tank is conducted out of the storage tank (1) when the volume of the phase change material (PCM) increases, and a gaseous medium not enriched with crystallisation germs is fed into the storage tank (1) when the volume of the phase change material decreases.

2. Latent heat accumulator according to claim 1, **characterised in that** the means (8, 10) for enriching the gaseous medium with crystallisation germs comprise a reservoir (8) filled with a substance (10) containing crystallisation germs, the reservoir (8) comprising an inlet (11) for feeding in a gaseous medium and an outlet (12) for conducting away the gaseous medium enriched with crystallisation germs.

3. Latent heat accumulator according to claim 2, **characterised in that** a feed line (17) extending into the interior of the reservoir is connected to the inlet (11) of the reservoir (8).

4. Latent heat accumulator according to any of claims 1 to 3, **characterised in that** the means for conveying the gaseous medium comprise a compressor (13) for compressing the gaseous medium.

5. Latent heat accumulator according to any of claims 1 to 4, **characterised in that** the means for controlling the flow in the line system comprise a non-return valve (35) arranged in the line system.

6. Latent heat accumulator according to any of claims 1 to 5, **characterised in that** the means (27) for degassing and ventilating the storage tank (1) comprise a particle filter (28), one chamber (30) of the particle filter (28) being in fluid communication with the interior of the storage tank (1) and the other chamber (31) of the filter (28) being in fluid communication with a gaseous medium.

7. Latent heat accumulator according to any of claims 1 to 6, **characterised in that** the feed line (24) extending into the interior of the storage tank (1) comprises a ventilation opening (34) above the boundary layer (26) that forms between the gaseous medium located in the storage tank and the phase change material (PCM).

8. Latent heat accumulator according to any of claims 1 to 7, **characterised in that** the gaseous medium is air.

9. Latent heat accumulator according to any of claims 1 to 8, **characterised in that** the substance (10) containing crystallisation germs is a salt in crystalline form.

10. Latent heat accumulator according to any of claims 1 to 9, **characterised in that** the substance (10) containing crystallisation germs is provided in the form of bulk material.

11. Latent heat accumulator according to any of claims 1 to 10, **characterised in that** the phase change material (PCM) is sodium acetate trihydrate and the substance containing crystallisation germs is sodium acetate trihydrate.

12. Method for triggering crystallisation of a phase change material (PCM) located in a storage tank (1) of a latent heat accumulator according to claim 1, wherein
a gaseous medium enriched with crystallisation germs is fed to the phase change material (PCM) below the boundary layer (26) that forms between the residual volume (36) of a gaseous medium located in the storage tank (1) and the phase change material (PCM), and gaseous medium located in the tank is conducted out of the storage tank when the volume of the phase change material increases, and a gaseous medium not enriched with crystallisation germs is fed into the storage tank when the volume of the phase change material decreases.

13. Method according to claim 12, **characterised in that** the gaseous medium is air.

14. Method according to either claim 12 or claim 13, **characterised in that** the substance (10) containing crystallisation germs is a salt in crystalline form.

15. Method according to any of claims 12 to 14, **characterised in that** the phase change material (PCM) is sodium acetate trihydrate and the substance (10) containing crystallisation germs is sodium acetate trihydrate.

## Revendications

1. Accumulateur de chaleur latente avec un récipient de stockage (1) qui est rempli, jusqu'à un volume résiduel (9), d'un milieu gazeux avec un matériau à changement de phase (PCM) et un dispositif (7) pour le déclenchement d'une cristallisation dans le matériau à changement de phase, le dispositif (7) pour le déclenchement d'une cristallisation dans le matériau à changement de phase comprenant :
un moyen (13) pour le transport d'un milieu gazeux,
des moyens (8, 10) pour l'enrichissement du milieu gazeux en germes de cristallisation,
un système de canalisations (16) pour l'alimentation du milieu gazeux, qui comprend une conduite d'alimentation (24) s'étendant à l'intérieur du récipient de stockage (1), **caractérisé en ce que** l'extrémité (25) de la conduite d'alimentation (24) se trouve en dessous de la couche limite (26), qui se forme entre le milieu gazeux se trouvant dans le réservoir et le matériau à changement de phase,
et **en ce que** le dispositif pour le déclenchement d'une cristallisation dans le matériau à changement de phase comprend :
des moyens (35) pour la régulation de l'écoulement dans le système de canalisations (16), qui sont conçus de façon à empêcher que, lors d'une réduction du volume du matériau à changement de phase (PCM), le milieu gazeux enrichi en germes de cristallisation soit aspiré à travers le système de canalisation vers le réservoir (1) et
des moyens (27) pour la désaération et l'aération du réservoir, qui sont conçus de façon à ce que, lors d'une augmentation du volume du matériau à changement de phase (PCM) dans le réservoir, le milieu gazeux se trouvant dans le réservoir soit évacué hors du réservoir (1), et, lors d'une diminution du volume du matériau à changement de phase, un milieu gazeux non enrichi en germes de cristallisation soit introduit dans le récipient de stockage (1).

2. Accumulateur de chaleur latente selon la revendication 1, **caractérisé en ce que** les moyens (8, 10) pour l'enrichissement du milieu gazeux en germes de cristallisation comprennent un réservoir (8) qui est rempli d'une substance (10) contenant des germes de cristallisation, le réservoir (8) comprenant une entrée (11) pour l'introduction d'un milieu gazeux et une sortie (12) pour l'évacuation du milieu gazeux enrichi en germes de cristallisation.

3. Accumulateur de chaleur latente selon la revendication 2, **caractérisé en ce que**, au niveau de l'entrée (11) du réservoir (8), est raccordée une conduite d'alimentation (17) s'étendant à l'intérieur du réservoir.

4. Accumulateur de chaleur latente selon l'une des revendications 1 à 3, **caractérisé en ce que** les moyens de transport du milieu gazeux comprennent un compresseur (13) pour la compression du milieu gazeux.

5. Accumulateur de chaleur latente selon l'une des revendications 1 à 4, **caractérisé en ce que** les moyens de régulation de l'écoulement dans le système de canalisations comprennent un clapet anti-retour (35) disposé dans le système de canalisations.

6. Accumulateur de chaleur latente selon l'une des revendications 1 à 5, **caractérisé en ce que** les moyens (27) pour la désaération et l'aération du récipient de stockage (1) comprennent un filtre à particules (28), une chambre (30) du filtre à particules (28) étant en liaison fluidique avec l'intérieur du récipient de stockage (1) et l'autre chambre (31) du filtre (28) étant en liaison fluidique avec un milieu gazeux.

7. Accumulateur de chaleur latente selon l'une des revendications 1 à 6, **caractérisé en ce que** la conduite d'alimentation (24) s'étendant à l'intérieur du récipient de stockage (1) comprenant une ouverture d'aération (34), qui se trouve au-dessus de la couche limite (26) qui se forme entre le milieu gazeux se trouvant dans le récipient de stockage et le matériau à changement de phase (PCM).

8. Accumulateur de chaleur latente selon l'une des revendications 1 à 7, **caractérisé en ce que** le milieu gazeux est de l'air.

9. Accumulateur de chaleur latente selon l'une des revendications 1 à 8, **caractérisé en ce que** la substance contenant des germes de cristallisation (10) est un sel sous forme cristalline.

10. Accumulateur de chaleur latente selon l'une des revendications 1 à 9, **caractérisé en ce que** la substance contenant des germes de cristallisation (10) existe sous la forme d'un produit en vrac.

11. Accumulateur de chaleur latente selon l'une des revendications 1 à 10, **caractérisé en ce que** le matériau à changement de phase (PCM) est du trihydrate d'acétate de sodium et la substance contenant des germes de cristallisation est du trihydrate d'acétate de sodium.

12. Procédé de déclenchement d'une cristallisation d'un matériau à changement de phase (PCM) se trouvant dans un récipient de stockage (1) d'un accumulateur de chaleur latente selon la revendication 1, un milieu gazeux enrichi en germes de cristallisation étant ajouté au matériau à changement de phase (PCM) en dessous de la couche limite (26) qui se forme entre le volume résiduel (36) d'un milieu gazeux se trouvant dans le récipient de stockage (1) et le matériau à changement de phase (PCM) et, lors d'une augmentation du volume du matériau à changement de phase, le milieu gazeux se trouvant dans le récipient de stockage (1) est évacué hors du récipient de stockage et, lors d'une diminution du volume du matériau à changement de phase, un milieu gazeux non enrichi en germes de cristallisation est introduit dans le récipient de stockage.

13. Procédé selon la revendication 12, **caractérisé en ce que** le milieu gazeux est de l'air.

14. Procédé selon la revendication 12 ou 13, **caractérisé en ce que** la substance contenant des germes de cristallisation (10) est un sel sous forme cristalline.

15. Procédé selon la revendication 12 à 14, **caractérisé en ce que** le matériau à changement de phase (PCM) est du trihydrate d'acétate de sodium et la substance contenant des germes de cristallisation (10) est du trihydrate d'acétate de sodium.
